# EUROPÄISCHE PATENTANMELDUNG

(11) **EP 3 444 470 A1**
(43) Veröffentlichungstag der Anmeldung: **20.02.2019**
(21) Anmeldenummer: 18189066.6
(22) Anmeldetag: 14.08.2018
(51) Int. Cl.: F03D 13/10

(54) **BEIHALTEVORRICHTUNG FÜR ROTORBLÄTTER VON WINDENERGIEANLAGEN**

(30) Priorität: 15.08.2017 DE 102017007655
(71) Anmelder: Senvion GmbH, 22297 Hamburg (DE)
(72) Erfinder: Edelmann, Ulf, 24647 Ehndorf (DE); Lorbach, Severin, 24114 Kiel (DE)
(74) Vertreter: Glawe, Delfs, Moll

(57) **Zusammenfassung**

Die Erfindung betrifft eine Vorrichtung (1) zum Beihalten eines Rotorblatts (81) beim Aufrichten eines Rotorsterns (80) einer Windenergieanlage sowie ein Verfahren zu deren Verwendung.

Die Vorrichtung (1) umfasst:
- eine u-förmige Auflageschale (2) zur Aufnahme der Vorderkante des Rotorblatts (81) mit wenigstens einem nach außen gerichteten Abrutschschutzelement (4) als Abrutschschutz für ein über die Auflageschale (2) geführtes Anschlagmittel (10);
- eine Blattspitzenbefestigung (3) zum Aufschieben auf die Rotorblattspitze (82) in Rotorblattlängsrichtung; und
- wenigstens ein Abspannseil (5) zwischen der Blattspitzenbefestigung (3) und der Auflageschale (2).

Zur Verwendung der Vorrichtung (1) wird nach Aufschieben der Blattspitzenbefestigung (3) auf die Spitze (82) des im aufgerichteten Zustand des Rotorsterns (80) nach unten weisendem Rotorblatts (81) und Anlegen der Auflageschale (2) an die Vorderkante des Rotorblatts (81), wobei das wenigstens eine Abspannseil (5) gespannt wird, anschließend ein Anschlagmittel (10) als Schlaufe oder Bucht um die Auflageschale (2) geführt wird, sodass das Anschlagmittel (10) an der Auflageschale (2) und dem Abrutschschutzelement (4) anliegt.

## Beschreibung

Die Erfindung betrifft eine Vorrichtung zum Beihalten eines Rotorblatts beim Aufrichten eines Rotorsterns einer Windenergieanlage sowie ein Verfahren zu deren Verwendung.

Windenergieanlagen sind aus dem Stand der Technik bekannt. Sie umfassen in der Regel einen Rotor, der drehbar an einer Gondel angeordnet ist, wobei die Gondel wiederum drehbar auf einem Turm angeordnet ist. Der Rotor treibt ggf. über eine Rotorwelle und ein Getriebe einen Generator an. Eine durch Wind induzierte Rotationsbewegung des Rotors kann so in elektrische Energie gewandelt werden, die dann über Umrichter und/oder Transformatoren -je nach Bauart des Generators auch wenigstens teilweise direkt - in ein elektrisches Netz eingespeist werden kann. Der Rotor umfasst mehrere (in der Regel drei), sich im Wesentlichen radial von der Rotorachse erstreckende Rotorblätter, die gegenüber einer Rotornabe drehbar befestigt sind, um den Anstellwinkel der Rotorblätter einzustellen.

Bei der Errichtung von Windenergieanlagen wird - je nach Konzept - der Rotor zunächst am Boden vormontiert, wobei die Rotorblätter mit der Rotornabe zur Bildung eines Rotorstern verbunden werden, bevor der Rotorstern als solches mithilfe eines Krans zur bereits auf dem Turm befindlichen Gondel gehoben und dort an die Rotorwelle angebunden wird. Alternativ ist es bekannt, die Rotorblätter einzeln mit einem Kran zur Gondel zu heben und dort an einer bereits montierten Rotornabe zu befestigen.

Beim Anheben eines vormontierten Rotorsterns zur Gondel über einen Hauptkran ist es erforderlich, das bei der letztendlichen Montage des Rotorsterns an der Gondel nach unten weisende Rotorblatt während des Anhebens aus der horizontalen Lage mit einem Hilfskran mit anzuheben und zu halten, damit dieses Rotorblatt beim Kippen des Rotorsterns aus der Horizontalen in eine Vertikale nicht durch Bodenkontakt beschädigt wird. Die Verwendung eines Hilfskrans beim Anheben eines Rotorsterns ist bspw. in Figur 3 des Dokumentes US 8,595,931 B illustriert.

Zur Befestigung des Kranseils des Hilfskrans an dem fraglichen Rotorblatt sind im Stand der Technik verschiedene Vorrichtungen bekannt.

In den Dokumenten WO 2013/091655 A1, US 8,595,931 B, US 2014/0360015 A1 und US 2015/0110638 A1 sind diverse Vorrichtungen zur Befestigung von Kranseilen eines Hilfskrans oder sonstiger Führungsleinen an einer vom Angriffspunkt des Hauptkrans entfernten Stelle eines Rotorblatts gezeigt. Den Vorrichtungen ist gemein, dass sie wie eine Manschette vollständig um ein Rotorblatt geschlungen werden oder das Rotorblatt zumindest schlingenförmig umgreifen. Auf die Vorder- und/oder Hinterkante des Rotorblatts können, in dem Bereich wo Manschetten oder Schlingen angreifen, Schutzelemente aufsteckt sein, mit denen ein unmittelbarer Kontakt zwischen Rotorblattoberfläche und Manschette bzw. Schlinge vermieden wird, sodass die Rotorblattoberfläche bspw. beim beabsichtigten oder unbeabsichtigten Durchrutschen nicht beschädigt wird. Auch ist es möglich, dass die Position der Manschetten bzw. Schlingen gegenüber dem Rotorblatt über der Länge des Rotorblatt entlanglaufenden Seilen fixiert ist.

Nachteilig an diesem Stand der Technik ist, dass entsprechende Manschetten oder Schlingen in Bereichen, in denen aerodynamische Anbauteile insbesondere an der Hinterkante des Rotorblatts angeordnet sind, nicht verwendet werden können, da es regelmäßig zu Beschädigungen an den Anbauteilen kommt. Damit lassen sich Manschetten und Schlingen gemäß dem Stand der Technik nicht bei solchen Rotorblättern verwenden, die über einen Großteil ihrer Hinterkante aerodynamische Anbauteile aufweisen.

Aus US 2012/0328399 A1 ist eine Vorrichtung bekannt, deren starres Gerüst um ein Rotorblatt gelegt werden kann, wobei am Gerüst Befestigungselemente vorgesehen sind, mit denen an vordefinierten Punkten am Rotorblatt eine reibschlüssige Verbindung geschaffen werden kann. Da diese Punkte von der Vorder- und Hinterkante des Rotorblatts entfernt angeordnet sein können, lässt diese Vorrichtung auch eine Montage von Rotorblättern mit aerodynamischen Anbauteilen an den genannten Kanten zu. Allerdings ist das Gerüst schwer, kostenintensiv, voluminös und in der Handhabung - insbesondere beim beschädigungsfreien Lösen von einem mit Hilfe des Gerüstes montierten Rotorblatt - schwierig.

Ausgehend von diesem Stand der Technik liegt der Erfindung die Aufgabe zugrunde, eine Beihaltevorrichtung für Rotorblätter von Windenergieanlagen insbesondere für deren Montage zu schaffen, bei dem die aus dem Stand der Technik bekannten Nachteile nicht mehr oder zumindest nur noch in begrenztem Umfang auftreten.

Gelöst wird diese Aufgabe durch eine Vorrichtung gemäß dem Hauptanspruch. Vorteilhafte Weiterbildungen sind Gegenstand der abhängigen Ansprüche.

Demnach betrifft die Vorrichtung zum Beihalten eines Rotorblatts beim Aufrichten eines Rotorsterns einer Windenergieanlage, umfassend
- eine u-förmige Auflageschale zur Aufnahme der Vorderkante des Rotorblatts mit wenigstens einem nach außen gerichteten Abrutschschutzelement als Abrutschschutz für ein über die Auflageschale geführtes Anschlagmittel;
- eine Blattspitzenbefestigung zum Aufschieben auf die Rotorblattspitze in Rotorblattlängsrichtung; und
- wenigstens ein Abspannseil zwischen der Blattspitzenbefestigung und der Auflageschale.

Die erfindungsgemäße Vorrichtung lässt sich beim Anheben eines Rotorsterns zur Montage an einer Windenergieanlage verwenden, indem nach Aufschieben der Blattspitzenbefestigung auf die Spitze des im montierten Zustand des Rotorsterns nach unten weisendem Rotorblatts und Anlegen der Auflageschale an die Vorderkante des Rotorblatts, wobei das wenigstens eine Abspannseil gespannt wird, anschließend ein Anschlagmittel derart als Schlaufe oder Bucht um die Auflageschale geführt wird, sodass das Anschlagmittel an der Auflageschale und dem Abrutschschutzelement anliegt.

Die Erfindung hat erkannt, dass zum Beihalten des im aufgerichteten Zustand nach unten weisenden Rotorblatts eines Rotorsterns ein manschetten- oder schlingenartiges Umgreifen des Rotorblatts gemäß dem Stand der Technik nicht erforderlich ist. Vielmehr ist es ausreichend, einen Anschlagpunkt im Bereich der Vorderkante zu schaffen, der ein Abrutschen eines Anschlagmittels in Richtung Blattwurzel des Rotorblatts während des Aufrichtens verhindert. Das Abrutschschutzelement auf der Außenseite ist ein entsprechender Abrutschschutz. Das Abrutschschutzelement kann bspw. als Hakenelement ausgeführt sein.

Über das wenigstens eine Abspannseil, welches an seinem anderen Ende von der Blattspitzenbefestigung gehalten wird, ist sichergestellt, dass die Auflageschale mit dem Abrutschschutzelement nicht selbst in die genannte Richtung rutscht. Da an der Blattspitze eines Windenergieanlagenrotorblatts regelmäßig keine aerodynamischen Anbauteile vorhanden sind, lässt sich die erfindungsgemäß vorgesehene Blattspitzenbefestigung dort problemlos in Richtung der Rotorblattlängsrichtung aufschieben.

Das Anschlagmittel kann bei der Verwendung der erfindungsgemäßen Vorrichtung so um das Rotorblatt geführt werden, dass es ausschließlich an der Auflageschale und dem Abrutschschutzelement, insbesondere aber nicht an der Hinterkante des Rotorblattes anliegt. Das Anschlagmittel ist weiterhin als Schlaufe oder Bucht - nicht aber als sich zuziehende Schlinge - um das Rotorblatt gelegt, sodass die Hinterkante auch während des Beihaltens in der Regel nicht von dem Anschlagmittel berührt wird. In der Folge können an der Hinterkante des Rotorblatts auch in dem Bereich, in dem die erfindungsgemäße Vorrichtung angeordnet ist, aerodynamische Anbauteile, bspw. Serrations, vorgesehen sein. Zudem wird durch das lediglich als Schlaufe oder Bucht um das Rotorblatt gelegte Anschlagmittel das Entfernen des Anschlagmittels und der erfindungsgemäßen Vorrichtung erheblich vereinfacht, da jegliches Öffnen oder Aufziehen, bspw. einer Schlinge, entfällt.

Um einen Kontakt der Anschlagmittel mit der Hinterkante des Rotorblatts zu vermeiden, ist das beizuhaltende Rotorblatt ggf. in eine geeignete Stellung zu drehen. Bei modernen Windenergieanlagen sind die Rotorblätter jedoch gegenüber der Rotornabe regelmäßig hinsichtlich des Blattwinkels einstellbar, sodass eine geeignete Stellung des Rotorblatts ohne weiteres zu erreichen ist.

Als Anschlagmittel, über die die erfindungsgemäße Vorrichtung und das darin eingeführte Rotorblatt letztendlich mit dem Kranhaken eines Hilfskrans zur Beiführung bei der Aufrichtung eines Rotorsterns verbunden ist, können Seile, Ketten, Hebebänder und - besonders bevorzugt - Rundschlingen verwendet werden. Diese Anschlagmittel lassen sich zur Bildung einer feststehenden Schlaufe an dem Kranhaken oder zur Bildung einer feststehenden Bucht an einer am Kranhaken eingeklinkten Traverse befestigen.

Es ist bevorzugt, wenn die Blattspitzenbefestigung als auf die Spitze eines Rotorblatts aufschiebbarer Ring oder aufschiebbare Tasche ausgestaltet ist. Ein entsprechender Ring bzw. eine entsprechende Tasche lässt sich einfach in Rotorblattlängsrichtung auf dieses Aufschieben. Durch geeignete Wahl der Größe des Rings bzw. der Tasche kann sichergestellt werden, dass die Blattspitzenbefestigung nicht über ein vorgegebenes Maß hinaus auf das Rotorblatt aufgeschoben wird, sodass abseits der Rotorblattspitze angeordnete aerodynamisehe Elemente am Rotorblatt nicht mit der Blattspitzenbefestigung in Berührung kommen. Sind an der Blattspitze aerodynamische Anbauteile vorhanden, kann die Blattspitzenbefestigung beispielsweise als formschlüssige Tasche ausgebildet sein, die ausreichend Freiraum für an der Blattspitze angeordnete aerodynamische Anbauteile bietet und diese somit nicht beschädigt.

Die Auflageschale und/oder die Blattspitzenbefestigung können vorzugsweise an die Geometrie des Rotorblatts, für das sie vorgesehen sind, derart angepasst sein, dass sie im unbelasteten Zustand möglichst formschlüssig anliegen. Durch ein möglichst formschlüssiges Anliegen im unbelasteten Zustand können während des Anhebens ggf. auch ruckartig auftretende Veränderungen der Geometrie der erfindungsgemäßen Vorrichtung und damit einhergehende Stöße auf den Rotorstern und/oder die Kräne vermieden oder zumindest deutlich reduziert werden.

Es ist bevorzugt, wenn zwischen Blattspitzenbefestigung und der Auflageschale zwei Abspannseile vorgesehen sind, wobei die Abspannseile vorzugsweise zu beiden Seiten des Bereichs der Auflageschale befestigt sind, der zur Anlage an die Vorderkante des Rotorblatts ausgebildet ist. Durch das Vorsehen von zwei Abspannseilen kann eine verbesserte, da auf zwei Punkte verteilte Krafteinleitung in die Auflageschale und somit auch in das Rotorblatt erreicht werden. Sind die beiden Abspannseile zu beiden Seiten desjenigen Bereichs der Auflageschalte befestigt, der im montierten Zustand der Auflageschale unmittelbar an der Vorderkante des Rotorblatts anliegt, ist eine symmetrische Krafteinleitung gegenüber eben diesem genannten Bereich möglich. Dies ist insbesondere dann vorteilhaft, wenn das Abrutschschutzelement in dem an der Vorderkante des Rotorblatts anliegenden Bereich der Auflageschale angeordnet ist. Es ist weiterhin bevorzugt, wenn das wenigstens eine Abspannseil ein Spannelement, z.B. eine Ratsche, umfasst, mit dem die Seilspannung eingestellt werden kann. Über ein entsprechendes Spannelement lässt sich auch nach Anlegen der Vorrichtung an ein Rotorblatt eine gewünschte Spannung im Abspannseil einstellen. Auch lässt sich über ein Spannelement regelmäßig die wirksame Länge des Abspannseils verändern, so dass der Abstand zwischen Auflageschale und Blattspitzenbefestigung leicht eingestellt werden kann. Dadurch wird eine einfache Anpassung der Vorrichtung an unterschiedliche Rotorblätter vereinfacht.

Das Abrutschschutzelement kann an der von der Blattspitzenbefestigung abgewandten Seite und/oder in dem zur Anlage an die Vorderkante des Rotorblatts ausgebildeten Bereich der Auflageschale angeordnet sein. Eine entsprechende Anordnung ist vorteilhaft, da so die übrigen Bereiche der Auflageschale gut als Reibschutz für das Rotorblatt vor den Anschlagmitteln dienen können.

Es ist bevorzugt, wenn die Auflageschale und/oder die Blattspitzenbefestigung mit einem rutschhemmenden Material, vorzugsweise Polyester-Urethan-Kautschuk, auf der Innenseite versehen sind. Weiterhin ist bevorzugt, wenn die Auflageschale und/oder die Blattspitzenbefestigung aus faserverstärktem Kunststoff oder Aluminium sind.

Zur Erläuterung der erfindungsgemäßen Verwendung wird auf die vorstehenden Ausführungen verwiesen.

Es ist bei der Verwendung weiterhin bevorzugt, wenn bei Anheben des Rotorsterns das Anschlagmittel unter Spannung gehalten wird und zum Lösen der Vorrichtung vom Rotorblatt nach vollständigem Aufrichten des Rotorsterns die Spannung im Anschlagmittel derart reduziert wird, dass die Auflageschale und die Blattspitzenbefestigung vom Rotorblatt hinunter rutschen. Da die erfindungsgemäße Vorrichtung zumindest zu großen Teilen durch Spannung im um die Auflageschale geführten Anschlagmittel an dem Rotorblatt gehalten wird, ist es wünschenswert, dieses solange gesichert unter Spannung zu halten, bis die erfindungsgemäße Vorrichtung nicht mehr benötigt wird - bspw. weil der Rotorstern vollständig aufgerichtet ist. In diesem Fall lässt sich die erfindungsgemäße Vorrichtung regelmäßig von dem Rotorblatt lösen, indem diese Spannung gelockert wird. Danach rutscht die Vorrichtung - insbesondere die Auflageschale und die Blattspitzenbefestigung - schwerkraftbedingt von dem Rotorblatt entlang dessen Vorderkante herunter.

Sind die Auflageschale und/oder die Blattspitzenbefestigung derart ausgeführt, dass sie auch ohne Spannung im Anschlagmittel nicht vom Rotorblatt rutschen, können insbesondere an der Auflageschale zusätzliche, beispielsweise zum Boden geführte Seile vorgesehen werden, um die Auflageschale vom Blatt herunterzuziehen.

Die Erfindung wird nun anhand einer vorteilhaften Ausführungsform unter Bezugnahme auf die beigefügten Zeichnungen beispielhaft beschrieben. Es zeigen:
- Figur 1:: eine schematische Darstellung der erfindungsgemäßen Vorrichtung;
- Figur 2:: eine schematische Darstellung der Vorrichtung aus Figur 1 im an einem Rotorblatt montierten Zustand; und
- Figur 3:: eine schematische Darstellung der Verwendung der Vorrichtung aus Figuren 1 und 2.

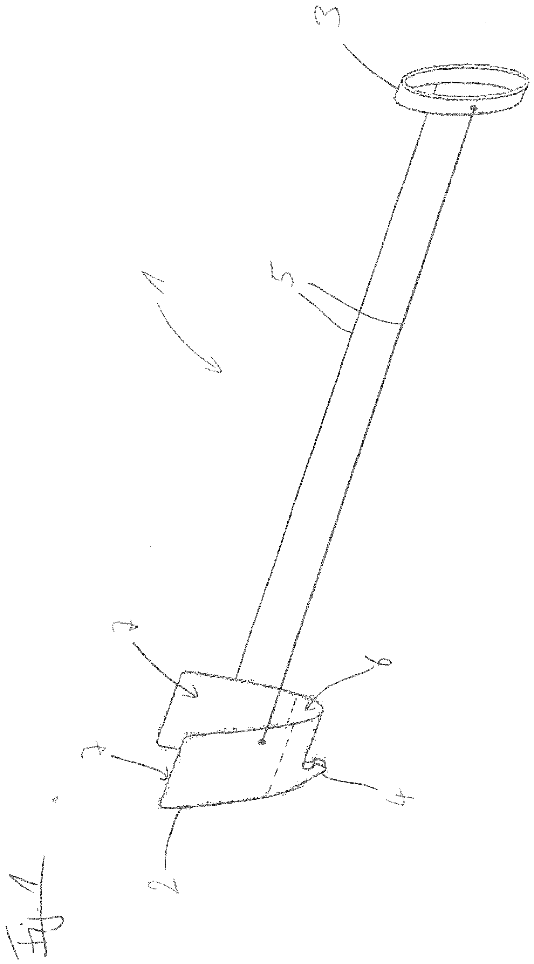

In Figur 1 ist schematisch eine Vorrichtung 1 zum Beihalten eines Rotorblatts 81 beim Aufrichten eines Rotorsterns 80 einer Windenergieanlage dargestellt.

Die Vorrichtung 1 umfasst eine Auflageschale 2 mit einem Hakenelement als Abrutschschutzelement 4, einer als Ring ausgebildeten Blattspitzenbefestigung 3 sowie zwei Abspannseile 5 zwischen der Auflageschale 2 und der Blattspitzenbefestigung 3.

Die Auflageschale 2 ist u-förmig ausgestaltet, um die Vorderkante eines Rotorblatts 81 aufnehmen zu können. Dabei unterteilt sich die Auflageschale 2 in drei Bereiche, nämlich in einen ersten zentralen Bereich 6, an dem die Vorderkante eines eingeführten Rotorblatts 81 unmittelbar anliegt, sowie zwei zu beiden Seiten dazu angeordnete Bereiche 7, die im montierten Zustand an der Unter- bzw. der Oberseite des Rotorblatts 81 anliegen.

Das Abrutschschutzelement 4 ist auf der Außenseite der Auflageschale 2 im zentralen Bereich 6 an der von der Blattspitzenbefestigung 3 entfernten Kante der Auflageschale 2 angeordnet. Die Abspannseile 5 sind hingegen an den seitlichen Bereichen 7 der Auflageschale 2 befestigt.

Die Auflageschale 2 ist zusammen mit dem Abrutschschutzelement 4 einstückig aus glasfaserverstärktem Kunststoff geformt und an die Form des aufzunehmenden Rotorblatts 81 angepasst. Auf der Innenseite ist die Auflageschale 2 mit rutschhemmenden Polyester-Urethan-Kautschuk versehen.

Die Blattspitzenbefestigung 3 ist als Ring aus Aluminium ausgeführt, der ebenfalls an die Form des Rotorblattes 81, für welches die Vorrichtung 1 gedacht ist, angepasst ist. Die Abspannseile 5 sind so an der Blattspitzenbefestigung 3 befestigt, dass die Abspannseile 5 im gespannten und auf ein Rotorblatt 81 montierten Zustand im Wesentlichen parallel zur Rotorblattoberfläche verlaufen.

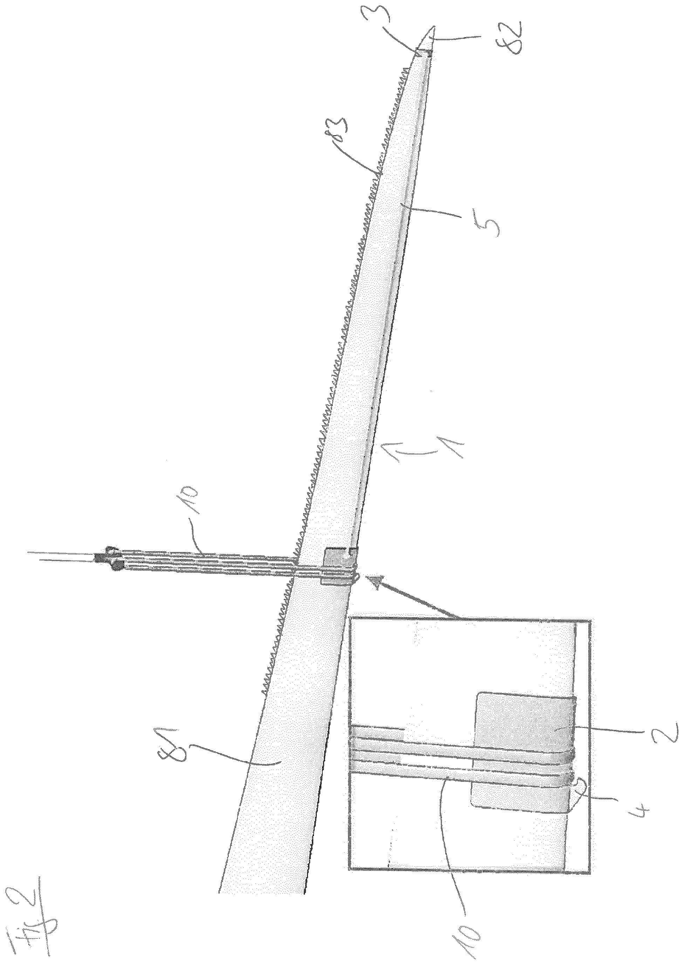

In Figur 2 ist die Vorrichtung 1 aus Figur 1 im Verwendungszustand - nämlich im auf ein Rotorblatt 81 montierten Zustand - dargestellt.

Zur Montage wird zunächst die Blattspitzenbefestigung 3 auf die Spitze 82 des Rotorblatts 81 geschoben, und zwar in Rotorblattlängsrichtung. Die Blattspitzenbefestigung 3 ist dabei so dimensioniert, dass sie nur so weit auf das Rotorblatt 82 aufgeschoben werden kann, dass sie nicht mit aerodynamischen Anbauteilen 83 - in Figur 2 an der Hinterkante des Rotorblatts 81 angeordnete Serrations - in Kontakt kommen und diese beschädigen kann.

Anschließend wird die Auflageschale 2 auf die Vorderkante des Rotorblatts 81 aufgeschoben, wobei darauf geachtet wird, dass die Abspannseile 5 gespannt sind. Es ist auch möglich, dass die Abspannseile 5 bei diesem Vorgang nicht unmittelbar gespannt werden. In diesem Fall weisen die Abspannseile 5 bevorzugt jeweils eine Ratsche als Spannelement (nicht dargestellt) auf, mit der die gewünschte Spannung im Abspannseil 5 nachträglich eingestellt werden kann. Die Auflageschale 2 kann ggf. bereits durch die rutschhemmende Beschichtung auf ihrer Innenseite an der Vorderkante des Rotorblattes 81 haften. In der Regel wird die Auflageschale 2 aber erst durch das anschließend anzubringende Anschlagmittel 10 - in diesem Beispiel eine Rundschlinge - am Rotorblatt 80 gesichert.

Das Anschlagmittel 10 ist - wie auch in der Vergrößerung in Figur 2 zu erkennen - über die Auflageschale 2 und unmittelbar am Abrutschschutzelement 4 vorbei geführt. Das Anschlagmittel 10 ist so an dem Kranhaken 11 eines Hilfskrans 12 befestigt, dass sich das Anschlagmittel 10 nicht zuzieht. Vielmehr bildet es aufgrund der Befestigung zu beiden Seiten des als Doppelhaken ausgeführten Kranhakens 11 eine Bucht. Es ist aber auch möglich, das Anschlagmittel 10 an einem Einfachhaken zu befestigen, womit sich dann eine Schlaufe bilden würde. In beiden Fällen ist elementar, dass sich das Anschlagmittel 10 anders als bei einer Schlinge, wie sie regelmäßig im Stand der Technik verwendet wird, nicht zuzieht.

Wie in Figur 2 bereits zu erkennen, berührt das Anschlagmittel 10 die aerodynamischen Anbauteile 83 an der Hinterkante des Rotorblatts 81 nicht. Solange das Anschlagmittel 10 über den Hilfskran 12 in eine geeignete Richtung unter Spannung gehalten wird, kann darüber auch die Auflageschale 2 am Rotorblatt 81 gehalten werden. Ein Abrutschen des Anschlagmittels 10 von der Auflageschale 2 - bspw. während des Aufrichtens des Rotorsterns 80, zu dem das Rotorblatt 81 gehört - wird durch das Abrutschschutzelement 4 vermieden.

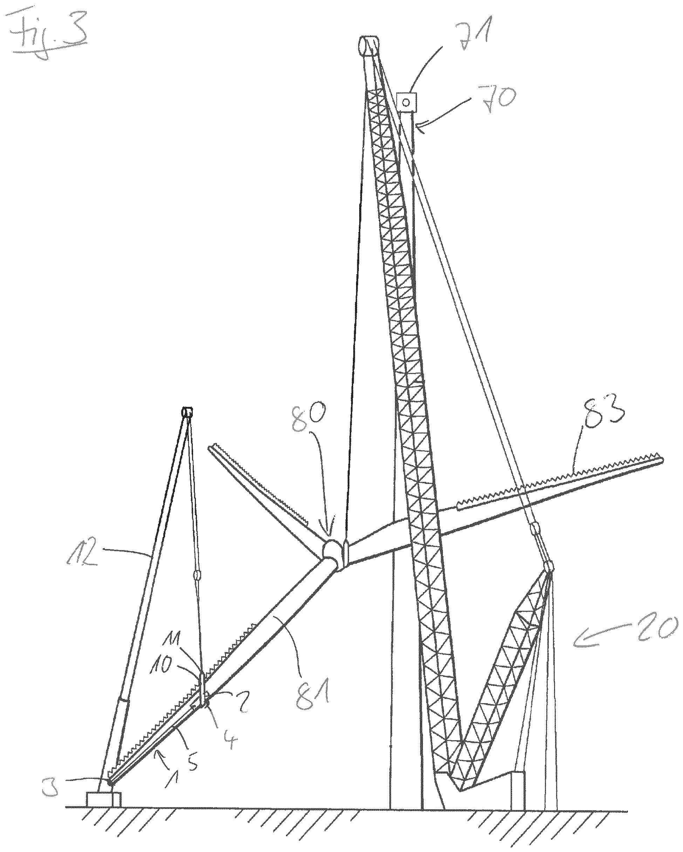

Entsprechendes ergibt sich unmittelbar aus Figur 3, in dem die Verwendung der anhand der Figuren 1 und 2 erläuterten Vorrichtung beim Aufrichten eines Rotorsterns 80 einer Windenergieanlage erläutert wird.

Der in Figur 3 gezeigte Rotorstern 80 umfasst drei Rotorblätter 81 jeweils mit aerodynamischen Anbauteilen 83 wurde in einer horizontalen Lage vormontiert und wird mit einem Hauptkran 20 aufgerichtet und anschließend zu einer Gondel 71 auf einem bereits errichteten Turm 70 für eine Windenergieanlage gehoben. Um zu verhindern, dass das im aufgerichteten Zustand des Rotorsterns 80 nach unten gerichtete Rotorblatt 81 während des Aufrichtens in Bodenkontakt kommt, ist der Hilfskran 12 vorgesehen. Der Hilfskran 12 greift mit einem Anschlagmittel 10 an dem fraglichen Rotorblatt 81 an, wobei eine erfindungsgemäße Vorrichtung 1 zum Sichern des Anschlagmittels 10 gegen ein Abrutschen entlang des Rotorblatts 81 vorgesehen ist. Wie in Figur 3 zu erkennen, wird das Anschlagmittel 10 durch das Abrutschschutzelement 4 vor dem Abrutschen gesichert.

Nach erfolgtem Aufrichten des Rotorsterns 80 kann die Spannung im Anschlagmittel 10 gelöst werden, womit die Vorrichtung 1 schwerkraftbedingt über die Rotorblattspitze 82 zu Boden fällt, ohne dass dabei die aerodynamischen Anbauelemente 83 beschädigt werden würden.

## Patentansprüche

1. Vorrichtung (1) zum Beihalten eines Rotorblatts (81) beim Aufrichten eines Rotorsterns (80) einer Windenergieanlage, umfassend
- eine u-förmige Auflageschale (2) zur Aufnahme der Vorderkante des Rotorblatts (81) mit wenigstens einem nach außen gerichteten Abrutschschutzelement (4) als Abrutschschutz für ein über die Auflageschale (2) geführtes Anschlagmittel (10);
- eine Blattspitzenbefestigung (3) zum Aufschieben auf die Rotorblattspitze (82) in Rotorblattlängsrichtung; und
- wenigstens ein Abspannseil (5) zwischen der Blattspitzenbefestigung (3) und der Auflageschale (2).

2. Vorrichtung nach Anspruch 1,
**dadurch gekennzeichnet, dass**
die Blattspitzenbefestigung (3) als auf die Spitze eines Rotorblatts (81) aufschiebbarer Ring oder aufschiebbare Tasche ausgestaltet ist.

3. Vorrichtung nach einem der vorhergehenden Ansprüche,
**dadurch gekennzeichnet, dass**
die Auflageschale (2) und/oder die Blattspitzenbefestigung (3) an die Geometrie des Rotorblatts (81), für das sie vorgesehen sind, derart angepasst sind, dass sie um unbelasteten Zustand möglichst formschlüssig anliegen.

4. Vorrichtung nach einem der vorhergehenden Ansprüche,
**dadurch gekennzeichnet, dass**
zwischen Blattspitzenbefestigung (3) und der Auflageschale (2) zwei Abspannseile (5) vorgesehen sind, wobei die Abspannseile (5) vorzugsweise zu beiden Seiten des Bereichs (6) der Auflageschale (2) befestigt sind, der zur Anlage an die Vorderkante des Rotorblatts (81) ausgebildet ist.

5. Vorrichtung nach einem der vorhergehenden Ansprüche,
**dadurch gekennzeichnet, dass**
wenigstens ein Abspannseil (5) ein Spannelement umfasst, mit dem die Seilspannung einstellbar ist.

6. Vorrichtung nach einem der vorhergehenden Ansprüche,
**dadurch gekennzeichnet, dass**
das Abrutschschutzelement (4) an der von der Blattspitzenbefestigung (3) abgewandten Seite und/oder in dem zur Anlage an die Vorderkante des Rotorblatts (81) ausgebildeten Bereich (6) der Auflageschale (2) angeordnet ist.

7. Vorrichtung nach einem der vorhergehenden Ansprüche,
**dadurch gekennzeichnet, dass**
die Auflageschale (2) und/oder die Blattspitzenbefestigung (3) mit einem rutschhemmenden Material, vorzugsweise Polyester-Urethan-Kautschuk, auf der Innenseite versehen sind.

8. Vorrichtung nach einem der vorhergehenden Ansprüche,
**dadurch gekennzeichnet, dass**
die Auflageschale (2) und/oder die Blattspitzenbefestigung (3) aus faserverstärktem Kunststoff oder Aluminium sind.

9. Verwendung einer Vorrichtung (1) gemäß einem der vorhergehenden Ansprüche beim Aufrichten eines Rotorsterns (80) zur Montage an einer Windenergieanlage,
**dadurch gekennzeichnet, dass**
nach Aufschieben der Blattspitzenbefestigung (3) auf die Spitze (82) des im aufgerichteten Zustand des Rotorsterns (80) nach unten weisendem Rotorblatts (81) und Anlegen der Auflageschale (2) an die Vorderkante des Rotorblatts (81), wobei das wenigstens eine Abspannseil (5) gespannt wird, anschließend ein Anschlagmittel (10) als Schlaufe oder Bucht um die Auflageschale (2) geführt wird, sodass das Anschlagmittel (10) an der Auflageschale (2) und dem Abrutschschutzelement (4) anliegt.

10. Verwendung nach Anspruch 9,
**dadurch gekennzeichnet, dass**
bei Anheben des Rotorsterns (80) das Anschlagmittel (10) unter Spannung gehalten wird und zum Lösen der Vorrichtung (1) vom Rotorblatt (81) nach vollständigem Aufrichten des Rotorsterns (80) die Spannung im Anschlagmittel (10) derart reduziert wird, dass die Auflageschale (2) und die Blattspitzenbefestigung (3) vom Rotorblatt (81) rutschen.

11. Verwendung nach Anspruch 9 oder 10,
**dadurch gekennzeichnet, dass**
das wenigstens eine Abspannseil (5) durch ein Spannelement gespannt wird.
